**Europäisches Patentamt**

**European Patent Office**

**Office européen des brevets**

(19)

(11) Veröffentlichungsnummer : **0 374 664 B1**

(12) # EUROPÄISCHE PATENTSCHRIFT

(45) Veröffentlichungstag der Patentschrift :
**07.10.92 Patentblatt 92/41**

(51) Int. Cl.$^5$ : **C08F 210/02,** C08F 218/08,
// (C08F210/02, 218:08),
(C08F218/08, 210:02)

(21) Anmeldenummer : **89122785.2**

(22) Anmeldetag : **09.12.89**

(54) **Verfahren zur Herstellung von Ethylen/Vinylacetat-Copolymerisaten, neue Ethylen/Vinylacetat-Copolymerisate und ihre Verwendung.**

(30) Priorität : **23.12.88 DE 3843562**

(43) Veröffentlichungstag der Anmeldung :
**27.06.90 Patentblatt 90/26**

(45) Bekanntmachung des Hinweises auf die Patenterteilung :
**07.10.92 Patentblatt 92/41**

(84) Benannte Vertragsstaaten :
**DE FR GB IT**

(56) Entgegenhaltungen :
**EP-A- 0 157 928**
**EP-A- 0 187 250**
**EP-A- 0 264 508**
**EP-A- 0 272 022**

(73) Patentinhaber : **BAYER AG**
**W-5090 Leverkusen 1 Bayerwerk (DE)**

(72) Erfinder : **Sutter, Hubert, Dr.**
**Domblick 28**
**W-5090 Leverkusen 2 (DE)**
Erfinder : **Kolwert, Alois, Dr.**
**Im Winkel 26**
**W-5064 Rösrath (DE)**
Erfinder : **Obrecht, Werner, Dr.**
**Holderbergerstrasse 108**
**W-4130 Moers 2 (DE)**

**Beschreibung**

Die Erfindung betrifft ein Verfahren zur Herstellung von Ethylen/Vinylacetat-Copolymerisaten (EVA) unter Verwendung bestimmter Comonomerer durch Hochdruckpolymerisation, neue Ethylen/Vinylacetat-Copolymerisate mit einem Gehalt copolymerisierter Einheiten dieser Comonomeren und die Verwendung dieser Copolymerisate als Fließverbesserer, als Klebstoffbindemittel, als Mischungskomponente für Thermoplaste und Duroplaste und zur Herstellung von Vulkanisaten.

Ethylen und Vinylacetat lassen sich bekanntlich in unterschiedlichem Mengenverhältnis bei statistischer Verteilung der Monomeren radikalisch copolymerisieren. Bei niedrigem Vinylacetatgehalt zeigen die Copolymerisate die für Polyethylen bei Raumtemperatur übliche Kristallinität und haben infolge längerer Ethylensequenzen thermoplastischen Charakter [s. hierzu H. Bartl, J. Peter, "Über Ethylen/ Vinylacetat-Copolymerisate und ihre Vernetzung", Kautschuk und Gummi 14, WT 23 - WT 32 (1961); Winnacker-Küchler, Chem. Technologie, Bd. 6, 4. Auflage, Kap. 2.2.7 "Ethylen-Vinylacetat-Copolymere", Carl Hanser Verlag, München-Wien, 1982, S. 570-572; M. Arne, R.H. Schwaar, Report Nr. 155, Ethylene Copolymers, Process Economics Program, Menlo Park, California, S. 1-40 (1983)].

Die Copolymerisation kann nach folgenden drei Verfahren durchgeführt werden:

1. Emulsionspolymerisation,
2. Lösungspolymerisation und
3. Hochdruckpolymerisation.

Die Herstellung von EVA durch Emulsionspolymerisation wird in der DE-OS 3 000 009 beschrieben. Man erhält nach diesem Verfahren Produkte mit Gehalten an copolymerisiertem Vinylacetat von 40 bis 70 Gew.-%. Die Produkte enthalten nicht vollsändig abtrennbare Emulgatorreste und sind für eine Reihe von Anwendungen unbrauchbar.

Auch die Herstellung von EVA mit Gehalten über 75 Gew.-% Vinylacetat durch Emulsionspolymerisation ist bekannt. Üblich sind Mitteldruckverfahren mit Drucken von 30 bis 500 bar bei Temperaturen von 20 bis 100°C. Die so erhaltenen Copolymerisate enthalten hohe Gelanteile und können als Festkautschuk für die meisten Zwecke nicht verarbeitet werden. Deswegen isoliert man diese Polymerisate im allgemeinen gar nicht, sondern appliziert direkt die anfallende wäßrige Feststoffdispersion (Latex).

Bei der Lösungspolymerisation zur Herstellung von EVA hat man außerordentlich wenig Freiheitsgrade, da für die Herstellung gelfreier Produkte zum einen eine gute Löslichkeit der Produkte während des gesamten Polymerisationsprozesses und zum anderen eine niedrige Übertragungskonstante des Lösungsmittels zur wachsenden Polymerkette sichergestellt sein müssen. Bei der Lösungspolymerisation zur Herstellung von EVA mit Vinylacetatgehalten über 30 Gew.-%. verwendet man deshalb beispielsweise tert.-Butanol oder Gemische aus tert-Butanol, Methanol und Kohlenwasserstoffen als Lösungsmittel (s. US-PS 2 396 785, DE-AS 1 126 614 und 1 126 613, FR-PS 1 189 387 und US-PS 2 947 735 sowie GB-PS 807 112, 843 974 sowie FR-PS 1 238 589 und 1 225 704, DE-OS 3 323 531). Für die wirtschaftliche Herstellung von EVA muß die Polymerisation außerdem bei hohen Feststoffkonzentrationen, bei der erhebliche Viskositäten auftreten, durchgeführt werden. Durch Lösungspolymerisation können Produkte mit bis zu 75 Gew.-%. Vinylacetat erhalten werden (DE-AS 1 495 767).

EVA mit niedrigem Vinylacetatgehalt kann durch Hochdruckmassepolymerisation wirtschaftlich hergestellt werden (H. Bucka, R. Nitzsche, H. Onderka, Plaste und Kautschuk 30, 6, S. 302-305 (1983)). Die Polymerisation erfolgt im allgemeinen bei Drucken von 1000 bis 3000 bar und bei Temperaturen von 150 bis 280°C. Nach diesem Verfahren hergestellte Produkte mit Vinylacetatgehalten bis 30 Gew.-% können als Schmelzklebstoffe und als Fließverbesserer für Rohöle und Mitteldestillate sowie für die Kabelummantelung verwendet werden.

EVA-Hochdruckmassepolymerisaten sind bisher Einsatzgebiete für Produkte mit Vinylacetatgehalten über 30 Gew.-% teilweise verschlossen, weil bei der Hochdruckmassepolymerisation von Etylen und Vinylacetat mit steigendem Vinylacetatgehalt die Klebrigkeit der Produkte zunimmt. Die Klebrigkeit der Produkte stört bei der Herstellung insbesondere in Austragsaggregaten und bei der Granulierung. Bei der Lagerung klebenden Granulats kommt es leicht zu Verbackungen und Verblockungen und bei der Verarbeitung klebender Materialien treten Schwierigkeiten in Dosier- und Mischaggregaten auf.

Es war daher Aufgabe der Erfindung, EVA mit reduzierter Klebrigkeit mit Vinylacetatgehalten von 30 bis 80 Gew.-% nach dem Hochdruckmassepolymerisationsverfahren herzustellen. Die erhaltenen Copolymerisate sollten vorzugsweise weitgehend frei von gelierten Anteilen sein.

Überraschenderweise wurde gefunden, daß sich die erfindungsgemäße Aufgabe durch Copolymerisation geringer Mengen von Verbindungen mit mindestens zwei Acryloyl bzw. Methacryloylgruppen pro Molekül erfolgreich lösen läßt. Der kausale Zusammenhang zwischen erfindungsgemäßem Verfahren und reduzierter Klebeneigung ist zwar gesichert, kann aber noch nicht erklärt werden; jedenfalls darf wohl angenommen werden, daß die verminderte Klebeneigung nicht einfach auf eine Molekulargewichtserhöhung zurückgeht, weil die Copolymerisation von anderen mehrfunktionellen Comonomeren, die man im allgemeinen zur Vernetzung und damit zur Molekulargewichtserhöhung einsetzt (z.B. Divinylbenzol, Triallylcyanurat, Diallylphthalat, Triallylphosphat), keinen merklich positiven Einfluß im Sinne einer verminderten Klebeneigung hat.

Gegenstand der Erfindung ist also ein Verfahren zur Herstellung von Ethylen/Vinylacetat-Copolymerisaten mit Gehalten an einpolymerisiertem Vinylacetat von 30 bis 80 Gew.-%. durch Massepolymerisation der Monomeren nach dem Hochdruckverfahren bei Drucken von 500 bis 5000 bar, vorzugsweise 1000 bis 3000 bar, dadurch gekennzeichnet, daß man die Polymerisation in Gegenwart von 50 ppm bis 2 Gew.-%, vorzugsweise von 100 ppm bis 1 Gew.-%, bezogen auf eingesetzte polymerisierbare Monomere, (Meth-)Acryloylverbindung mit mindestens 2 Acryloyl- oder Methacryloylgruppen pro Molekül durchführt, wobei das Polymer nur aus Ethylen-, Vinylacetat- und (Meth-)Acryloyl- Einheiten besteht.

Für das erfindungsgemäße Verfahren bevorzugte (Meth-) Acryloylverbindungen umfassen Verbindungen mit einem Molekulargewicht von 126 bis 1000, vorzugsweise von 126 bis 500, beispielsweise Acrylsäureanhydrid, Methacrylsäureanhydrid, die Acrylate und Methacrylate von mehrwertigen, insbesondere von 2- und 3-wertigen, aliphatischen, cycloaliphatischen, araliphatischen und aromatischen Alkoholen mit 2 bis 24 C-Atomen pro Molekül, also z.B. Acrylate und Methacrylate von Ethylenglykol, Propandiol-1.2 und -1.3, Butandiol-1.2, -1.3, -2.3 und -1.4, Neopentylglykol, Hexandiolen, insbesondere Hexandiol-1.6, Cyclohexandiol-1.4, 1.4-Bis(hydroxymethyl)cyclohexan, Hydrochinon, Resorcin, Bisphenol-A, oxethyliertem Bisphenol-A, Hydrochinon-di($\beta$-hydroxyethyl)-ether; von Glycerin, Trimethylolethan und -propan, Phloroglucin.

Bevorzugte (Meth-)Acryloylverbindungen sind auch Acrylate und Methacrylate von Polyetherpolyolen, vorzugsweise von Polyethylen- und Polypropylenglykolen mit 1 bis 20, vorzugsweise 1 bis 12, Ether-Sauerstoffatomen pro Molekül; insbesondere von Di- und Triethylenglykol und von Di- und Tripropylenglykol.

Das erfindungsgemäße Verfahren kann bei Temperaturen von 50 bis 450°C, vorzugsweise von 100 bis 350°C, durchgeführt werden.

Das erfindungsgemäße Verfahren kann durch radikalbildende Substanzen initiiert werden. Zu den geeigneten Polymerisationsinitiatoren zählen diejenigen Verbindungen, die auch für die Hochdruckhomopolymerisation des Ethylens eingesetzt werden. Geeignet ist beispielsweise Sauerstoff, vorzugsweise in Mengen von 10 bis 1000 Mol.-ppm, bezogen auf zu polymerisierende Monomere. Andere bevorzugte Polymerisationsinitiatoren sind z.B. Peroxide, Hydroperoxide und ihre Mischungen, vor allem aber Mischungen von Sauerstoff und Peroxiden und/oder Hydroperoxiden. Bevorzugte Peroxide und Hydroperoxide umfassen tert.-Butylperpivalat, Di-tert.-butylperoxid, tert.-Butylhydroperoxid, tert.-Butylperbenzoat, Dilauroylperoxid, tert.-Butylperisooctanoat und tert.-Butylperisononanat. Besonders geeignet sind die Peroxide Ditert.-butylperoxid, tert.-Butylperpivalat und tert.-Butylperisanonanat.

Die Konzentration des zudosierten Initiators liegt im allgemeinen zwischen 0,001 bis 100 Mol-ppm, bevorzugt 0,1 bis 30 Mol-ppm, bezogen auf gesamte, der Polymerisation zugeführte Monomere. Als geeignetes Lösungsmittel für den Initiator werden zweckmäßig aliphatische Kohlenwasserstoffe wie Oktan oder Benzin verwendet. Es können aber auch andere inerte Lösungsmittel wie Chlorbenzol, Cyclohexan oder Methanol eingesetzt werden.

Die üblichen Regler, z.B. Kohlenwasserstoffe wie Propan, Propen, iso-Octan, Ketone wie Aceton, Ethylmethylketon, Aldehyde wie Propionaldehyd wirken auch im erfindungsgemäßen Verfahren regelnd. Man verzichtet deshalb vorzugsweise auf die Zugabe solcher Substanzen. Ist ihre Verwendung, z.B als Lösungsmittel für den Initiator oder für die Spülung von Rührwellen, unumgänglich, so kann der regelnde Einfluß dieser Verbindungen durch Höherdosierung der erfindungsgemäß zu verwendenden (Meth-)Acryloylverbindungen oder üblicher Vernetzer kompensiert werden.

Das erfindungsgemäß hergestellte Copolymerisat kann beispielsweise folgendermaßen aufgearbeitet werden: Im Anschluß an die Polymerisation wird das Reaktionsgemisch in eine Hochdruckprodukttrennzone geleitet, in der ein Druck zwischen 100 und 500 bar und eine Temperatur zwischen 150 und 300°C herrscht. In diesem Hochdruckproduktabscheider wird das im Reaktor erhaltene Copolymerisat von nicht polymerisierten Monomeren abgetrennt. Aus dem Hochdruckproduktabscheider wird das Copolymerisat in eine Niederdruckprodukttrennzone, in der ein Druck von unter 10 bar herrscht, geführt.

Vom Niederdruckproduktabscheider wird das erhaltene Produkt über ein Austragsaggregat geführt, abgekühlt und granuliert. Bevorzugt ist die Verwendung eines Unterwassergranulators, wobei das eingesetzte Wasser Zusätze zur weiteren Reduktion der Verklebungstendenz der Granulate enthalten kann.

Die erfindungsgemäß hergestellten Copolymerisate besitzen vorzugsweise Gelgehalte unter 0,5, vorzugsweise unter 0,2 Gew.-%, bezogen auf Copolymerisat und bestimmt als unlöslicher Rückstand nach 24-stündiger Extraktion mit tert.-Butanol im Soxhlet-Aufsatz. Qualitativ können Gelanteile sehr leicht als Oberflächenrauhigkeit extrudierter Copolymerisatstränge mit Durchmessern von 2 bis 5 mm erkannt werden.

Der Schmelzflußindex (MFI) der erfindungsgemäß hergestellten Copolymerisate liegt in der Regel unter 100 g/10 min (gemessen bei 190°C/2,16 kp); ihre als Zahlenmittel $\overline{M}_n$ bestimmten Molekulargewichte liegen im Bereich von 15 000 bis 200 000, vorzugsweise von 22 000 bis 70 000 (membranosmometrisch bestimmt in Toluol); ihre Mooney-Viskositäten gemäß DIN 53 523 betragen im allgemeinen unter 50 ML (1 + 4) 100°C.

Die erfindungsgemäß hergestellten Copolymerisate können in nicht vulkanisiertem oder in vulkanisiertem Zustand verwendet werden. Bevorzugte Beispiele für die Verwendung in nicht vulkanisiertem Zustand sind die Verwendung als Fließverbesserer für Schmiermittel und Hydrauliköle (wie z.B. Mitteldestillate nach DIN 7728 T1), als Klebstoffbindemittel, insbesondere für Schmelzkleber, und als (weichmachende) Mischungskomponente für Thermoplaste, Duroplaste und Kautschuke. Die verwendeten Mengen hängen vom Einsatzzweck ab: So können, Fließverbesserer Mengen ab 1 Gew.-% und Schmelzkleber bis zu 100 Gew.-% der erfindungsgemäß hergestellten Copolymerisate enthalten.

Geeignete Thermoplaste und Duroplaste umfassen z.B. PVC, Polymethylmethacrylat, Styrol- und Acrylnitrilcopolymerisate einschließlich ABS, Polyvinylidenchlorid, Polyester einschließlich Polycarbonate, Polyamide, Polyvinylacetate, Polyphenylensulfid, Polyethylen und thermoplastische Polyester wie Polyalkylenterephthalate; ungsättigte Polyesterharze, Phenol/Formaldheyd- und Amin/Formaldehyd-Kondensate.

Für die meisten Anwendungen setzt man die erfindungsgemäß hergestellten Copolymerisate in vulkanisierter Form ein. Die Vulkanisation kann - gegebenenfalls nach Zugabe von Füllstoffen, und/oder Stabilisatoren - durch Vernetzung mit Peroxiden, gegebenenfalls in Kombination mit mehrfunktionellen, vernetzend wirkenden Verbindungen wie z.B. Triallylcyanurat, Triallylisocyanurat, Bismaleinimiden oder Divinylbenzol, erfolgen.

Erfindungsgemäß hergestellte Copolymerisate, die neben Ethylen- und Vinylacetateinheiten copolymerisierte Reste der weiter oben beschriebenen Comonomeren mit reaktiven Gruppen enthalten, können mit anderen Vernetzungschemikalien vernetzt werden. Hierfür kommen in Frage: Salzvulkanisation mit Metalloxiden oder -peroxiden, wie Zinkoxid und -peroxid, Magnesium, Calciumoxid, bei carboxylgruppenhaltigen Polymerisaten, Vernetzung mit Diaminen bzw. Disulfiden bei epoxydhaltigen und anhydridhaltigen Polymerisaten; Vernetzung mit Diisocyanaten bei hydroxylgruppenhaltigen Polymerisaten; Vernetzung mit elementarem Schwefel oder Schwefelspendern bei doppelbindungshaltigen und chlorhaltigen Polymerisaten oder Polymerisaten, die Kohlenmonoxid eingebaut enthalten. Neben den genannten Vernetzungsreaktionen sind auch Vulkanisationsreaktionen wie z.B. die Harzvulkanisation oder die Vernetzung mit Chinonen geeignet.

"Vulkanisiert" im Sinne der Erfindung bedeutet, daß bei 10-stündiger Extraktion im Soxhlet-Aufsatz mit Toluol als Extraktionsmittel weniger als 5 , vorzugsweise weniger als 3 Gew.-%, bezogen auf Copolymerisat, extrahierbar ist.

Eine wichtige Verwendung von Vulkanisaten erfindungsgemäß hergestellter Copolymerisate ist der Einsatz als Mischungskomponente für andere Kautschuke, wie z.B. kautschukartige Homo- und Copolymerisate von Butadien, Isopren, Chloropren, Acrylnitril, Vinylacetat, Estern von Acryl- bzw. Methacrylsäure mit $C_1$-$C_8$-Mono- bzw. Dialkoholen; Vinylchlorid, Ethylen.

Für diese Zwecke können die erfindungsgemäß hergestellten Copolymerisate in Mengen innerhalb weiter Grenzen, z.B. von 1 bis 99, vorzugsweise von 10 bis 90, insbesondere von 10 bis 40 und 60 bis 90, Gew.-%, bezogen auf Mischung, verwendet werden.

Man kann die bereits vulkanisierten Copolymerisate zusetzen, wird aber meist die Copolymerisate in nicht-vulkanisierter Form den nicht-vulkanisierten Kautschuken zusetzen und dann beide gemeinsam vulkanisieren.

Diese letzte Ausführungsform läßt sich auch auf die Mischung mit Thermoplasten, wie z.B. mit Ethylen/Vinylacetat-Copolymerisaten mit VA-Gehalten von 1 bis weniger als 30 Gew.-%, anwenden.

Diese vulkanisierten erfindungsgemäß hergestellten Copolymerisate können als solche oder in Form der oben beschriebenen Mischungen zur Herstellung von Formkörpern, Folien und Überzügen jeglicher Art verwendet werden, z.B. zur Herstellung von Kabelaußenmänteln, Kabelleitlagen, Dichtungen, Schläuchen, Transportbändern, Kraftübertragungselementen wie Zahn- und Keilriemen sowie Isoliermaterialien für die Schall- und Schwingungsdämpfung.

<u>Beispiele</u>

Die Versuche wurden in einem kontinuierlich durchströmten stopfbuchslosen 700 ml Hochdruckrührautoklaven mit idealer Rückvermischung durchgeführt. Als Initiator wurde tert.-Butylperisooctanoat verwendet. Die Dosierung wurde so gewählt, daß bei einer Monomermenge von 25 kg/h die Reaktionstemperatur bei 160°C konstant gehalten werden konnte. Die Polymerisationsumsätze bei den einzelnen Versuchen lagen zwischen 14 und 16 %. Die Verweilzeiten betrugen 1 Minute. Der Druck wurde bei allen Versuchen konstant gehalten (1850 bar).

Die nachfolgende Tabelle zeigt den Einfluß von Methacrylsäureanhydrid (MASA) auf die Klebrigkeit der erhaltenen Copolymerisate bei verschiedenem Vinylacetatgehalt (VA). Die Klebrigkeit wurde mit Werten von 0-5 quantifiziert, wobei 0 nahezu nicht klebend und 5 sehr stark klebend bedeuten.

| Beispiel | 1 | V1 | 2 | V2 | 3 | 4 | V4 | 5 | V5 |
|---|---|---|---|---|---|---|---|---|---|
| VA (Gew.-%) | 30 | 30 | 40 | 40 | 40 | 40 | 40 | 70 | 70 |
| MASA (ppm) | 510 | – | 420 | – | 630 | 830 | 830 | 530 | – |
| Regler i-Octan (ppm) | – | – | | | | 400 | – | – | – |
| MFI (g/10 min) bei 2,16 kp/190° C | 0,5 | 130 | 46 | >200 | 0,62 | 8 | <0,1 | 60 | >>200 |
| Klebrigkeit | 0 | 3 | 2 | 4 | 0 | 1 | 0 | 2 | 5 |
| gelhaltig | nein | nein | nein | nein | nein | nein | ja | nein | nein |

## Patentansprüche

1.  Verfahren zur Herstellung von Ethylen/Vinylacetat-Copolymerisaten mit Gehalten an einpolymerisiertem Vinylacetat von 30 bis 80 Gew.-% durch Massepolymerisation der Monomeren nach dem Hochdruckverfahren bei Drucken von 500 bis 5000 bar, dadurch gekennzeichnet, daß man die Polymerisation in Gegenwart von 50 ppm bis 2 Gew.-%, bezogen auf eingesetzte polymerisierbare Monomere, (Meth-)Acryloylverbindung mit mindestens 2 Acryloyl- oder Methacryloylgruppen pro Molekül durchführt, wobei das Polymer nur aus Ethylen-, Vinylacetat- und (Meth-)Acryloyl- Einheiten besteht.

2. Verfahren nach Anspruch 1 bei Drucken von 1000 bis 3000 bar.

3. Verfahren nach Ansprüchen 1 und 2 in Gegenwart von 100 ppm bis 1 Gew.-% (Meth-)Acryloylverbindung mit mindestens 2 Acryloyl- oder Methacryloylgruppen pro Molekül.

4. Verfahren nach Ansprüchen 1 bis 3, wonach als (Meth-)Acryloylverbindung Acrylsäureanhydrid oder Methacrylsäureanhydrid ausgewählt wird.

5. Ethylen/Vinylacetat-Copolymerisate mit einem Gehalt an ein polymerisiertern Vinylacetat von 30 bis 80 Gew.-% erhältlich nach dem Verfahren des anspruchs 1.

6. Verwendung der Copolymerisate nach Anspruch 5 als Fließverbesserer, als Klebstoffbindemittel und als Mischungskomponente für Thermoplaste und Duroplaste.

7. Verwendung der Copolymerisate nach Anspruch 5 zur Herstellung von Formkörpern.

8. Verwendung der Copolymerisate nach Anspruch 5 zur Herstellung von Vulkanisaten.

## Claims

1. A process for the production of ethylene/vinyl acetate copolymers containing from 30 to 80% by weight copolymerized vinyl acetate by bulk polymerization of the monomers by the high-pressure method under pressures of 500 to 5, 000 bar, characterized in that the polymerization is carried out in the presence of from 50 ppm to 2% by weight, based on the polymerizable monomers used, of a (meth)acryloyl compound containing at least two acryloyl or methacryloyl groups per molecule, the polymers consisting of ethylene vinyl acetate and (meth)acryloyl units.

2. A process as claimed in claim 1 carried out under pressures of 1,000 to 3,000 bar.

3. A process as claimed in claims 1 and 2 carried out in the presence of from 100 ppm to 1% by weight of the (meth)-acryloyl compound containing at least two acryloyl or methacryloyl groups per molecule.

4. A process as claimed in claims 1 to 3, characterized in that acrylic anhydride or methacrylic anhydride is used as the (meth)acryloyl compound.

5. Ethylene/vinyl acetate copolymers containing 30 to 80% by weight of copolymerized vinyl acetate obtainable by the process claimed in claim 1.

6. The use of the copolymers claimed in claim 5 as flow promoters, as adhesive binders and as a mixture component for thermoplastics and thermosets.

7. The use of the copolymers claimed in claim 5 for the production of moldings.

8. The use of the copolymers claimed in claim 5 for the production of vulcanizates.

## Revendications

1. Procédé de production de copolymérisats éthylène/acétate de vinyle ayant des teneurs en acétate de vinyle incorporé par polymérisation de 30 à 80 % en poids, par polymérisation en masse des monomères par le procédé à haute pression, à des pressions de 500 à 5000 bars, caractérisé en ce qu'on conduit la polymérisation en présence de 50 ppm à 2 % en poids, par rapport aux monomères polymérisables utilisés, d'un composé (méth)acryloylique portant au moins deux groupes acryloyle ou méthacryloyle par molécule, le polymère étant uniquement constitué de motifs éthylène, acétate de vinyle et (méth)acryloyle.

**2.** Procédé suivant la revendication 1, mis en oeuvre à des pressions de 1000 à 3000 bars.

**3.** Procédé suivant les revendications 1 et 2, mis en oeuvre en présence de 100 ppm à 1 % en poids de composé (méth)acryloylique portant au moins deux groupes acryloyle ou méthacryloyle par molécule.

**4.** Procédé suivant les revendications 1 à 3, dans lequel on choisit comme composé (méth)acryloylique l'anhydride acide acrylique ou l'anhydride d'acide méthacrylique.

**5.** Copolymérisats éthylène/acétate de vinyle ayant une teneur en acétate de vinyle incorporé par polymérisation de 30 à 80 % en poids, pouvant être obtenus par le procédé suivant la revendication 1.

**6.** Utilisation des copolymérisats suivant la revendication 5 comme agents améliorant la fluidité, comme adhésifs et comme composants de mélange pour des matières thermoplastiques et des matières duroplastiques.

**7.** Utilisation des copolymérisats suivant la revendication 5 pour la production de pièces de forme.

**8.** Utilisation des copolymérisats suivant la revendication 5 pour la production de vulcanisats.